# EUROPEAN PATENT SPECIFICATION

(11) **EP 2 628 961 B1**
(45) Date of publication and mention of the grant of the patent: **30.09.2015**
(21) Application number: 13155020.4
(22) Date of filing: 13.02.2013
(51) Int. Cl.: F16B 5/06, F16B 5/12, F16B 21/07

(54) **Clip and fastening arrangement with a clip**
Clip und Befestigungsanordnung mit einem Clip
Clip et arrangement de fixation avec un clip

(30) Priority: 14.02.2012 DE 102012101179
(43) Date of publication of application: 21.08.2013
(73) Proprietor: Newfrey LLC, Newark, Delaware 19711 (US)
(72) Inventor: Kempf, Christian, 35394 Gießen (DE); Rosemann, Frank, 35394 Gießen (DE); Reindl, Johann-Adalbert, 35394 Gießen (DE); Dix, Norman, 85055 Ingolstadt (DE)
(74) Representative: Haar, Lucas Heinz Jörn

(56) References cited:
- EP-A2- 0 590 317
- WO-A1-2010/116939
- DE-A1- 3 232 926
- DE-U1-202009 015 837
- GB-A- 2 307 508
- US-A1- 2008 044 255
- US-A1- 2010 050 401

## Description

The invention relates to a clip for fastening an object provided with a fastening aperture to a stud projecting from a support part, having a hollow body that extends along an axis and that has a cavity and has, at a first axial end, an opening for insertion of the stud and has, in the cavity, elastic retaining means by which the stud can be secured in the cavity. The invention additionally concerns a fastening arrangement having a support part that has a stud projecting therefrom with a shank and with a head that is offset from the shank by an engagement step, having an object with a fastening aperture through which the shank of the stud extends far enough from one side of the object that the head of the stud projects on the other side of the object, and having a clip fastened to the head that secures the object on the stud.

A clip of the specified type and a fastening arrangement formed with the use of the clip are known from DE 10 2006 038,991 A1. The prior art clip is designed to be inserted in the fastening aperture in the object to be fastened, and it is provided, at its end opposite the opening for insertion of the stud, with a radially outward-extending flange in the form of a spring washer that rests against the region of the object surrounding the fastening aperture, and elastically presses the object against the support part. The prior art design of the clip requires a comparatively large fastening aperture in the object to be fastened, and additionally requires a relatively large region surrounding the fastening aperture on which the spring washer can be supported.

EP 0 590 317 A2 discloses a clip according to the preamble of claim 1 comprising a hollow body that extends along an axis and has a cavity for insertion of a stud which can be secured in the cavity by elastic locking fingers that extend from an opening at a first end of the clip into the cavity. Radially elastic fingers surrounding a cavity are arranged on the hollow body and project in the axial direction from the first end. Each radially elastic finger has at the free end a downwardly outwardly extending camming surface and a radially outwardly extending shoulder which faces the first end. This known clip is flexible in radial direction and does not provide rigid radial support. In the fastening arrangement the clip is located in the fastening aperture of the object, the diameter of the aperture being correspondingly large.

A clip for connecting ends of planar shield members is disclosed in WO 2010/116939 A1 and comprises an insertion projection being inserted in a connecting through-hole formed in the shield member. The insertion projection has the shape of a hollow body extending from a flange in an axial direction. The end of the hollow body opposite the flange forms radially elastic fingers which are provided with retaining means at their ends facing the flange. Elastic locking fingers are arranged in the cavity of the hollow body and are adapted to secure a stud in the cavity.

DE 20 2009 015 837 U1 discloses a resilient clip that is located on a stud and is held in a defined position by the head of the stud. The clip has an opening to receive the head of the stud and has, in the opening, resilient locking fingers which engage with the head when the clip is placed on the stud. The wall of the opening of the clip is formed of cylindrical wall sections and, located there between, wall sections with a fluted profile, wherein the fluted wall sections extend into the opening with their convex sides and form a guide for the head of the stud.

The object of the invention is to provide a clip of the specified type that requires only a small amount of space in the vicinity of the fastening aperture for support on the object to be fastened. In addition, the clip should be arranged such that the fastening aperture in the object to be fastened can have a small diameter.

The object is attained by a clip with the features specified in claim 1. Advantageous embodiments of the clip and a fastening arrangement using the clip are specified in the additional claims.

According to the invention, the clip comprises a hollow body that extends along an axis and that has a cavity and has, at an axial end, an opening for insertion of the stud projecting from the support part and has, in the cavity, elastic retaining means by which the stud can be secured in the cavity, wherein radially elastic fingers are arranged on the hollow body, which fingers project in the axial direction from the first end of the hollow body and are intended to engage in the fastening aperture of the object, wherein axially extending centering ribs are arranged in the cavity and attached to the hollow body inside the cavity, and their ends facing the opening each form one of the elastic fingers, the ends of which protrude out of the opening.

By means of the elastic fingers, the clip is stabilized in its position and is prevented from vibrating. Moreover, the clip can be supported on the edge of the object's fastening aperture such that an axial force component becomes effective by means of which the fastening arrangement consisting of support part with stud, object, and clip can be held without play in the axial direction. Only a minimal annular space at the edge of the fastening aperture is required for support of the elastic fingers. According to the invention, the clip is located outside the fastening aperture, and has a small radial extent in comparison to the prior art clip. Consequently, the clip's space requirement in the radial direction is quite small.

The purpose of the centering ribs is to center the stud during insertion in the cavity and to hold the clip in a centered location with respect to the stud when in the fastening position. In conjunction with the elastic fingers, the centering ribs ensure that the fastened clip is stabilized in an orientation that is coaxial with the stud axis and cannot tilt. This contributes to the vibration stability of the clip. The fingers can be of a size and have a great axial length that is beneficial for the spring behavior, while the distance between the first end of the clip and the object being fastened can remain short. The outer contour of the hollow body can be smooth and unbroken, which facilitates handling.

A design of the clip is especially advantageous in which the elastic fingers have, at their ends, outward-facing support surfaces that are inclined toward the axis in such a manner that they approach the central axis more closely with increasing distance from the hollow body. The magnitude of the axial force component can be influenced by the inclination of the support surfaces, and the dependence on the shape of the edge of the fastening aperture can be reduced. The support surfaces can be flat or curved.

To form the elastic retaining means, according to the invention elastic locking fingers can be arranged between the centering ribs in the cavity, which fingers extend outward in the insertion direction and into the cavity from an attachment point near the insertion opening. In advantageous fashion, the ends of the locking fingers adjacent to the insertion opening are attached to a wall of the hollow body by an elastically flexible section. At their free ends, the locking fingers can have a first, radially extending locking surface, and a second, axially extending locking surface adjacent thereto. The first and second locking surfaces are intended for support against a head of the stud provided with an engagement step.

The hollow body of the clip preferably has a cylindrical annular wall that surrounds the cavity and is provided at the first end with a reinforced annular shoulder surrounding the opening. The annular shoulder is suitable for supporting an assembly tool.

The penetration depth of the stud in the cavity can be limited by a stop. The stop advantageously can be formed on the centering ribs. Such a stop additionally prevents the clip from being placed on the stud the wrong way around, thus avoiding incorrect assembly.

A fastening arrangement according to the invention comprises a support part that has a stud projecting therefrom with a shank and with a head that is offset from the shank by an engagement step, and also an object with a fastening aperture through which the shank of the stud extends far enough from one side of the object that the head of the stud projects on the other side of the object, and a clip with a hollow body that has a cavity, an opening for insertion of the stud, elastic retaining means, and radially elastic fingers, wherein the head of the stud is located in the cavity of the clip and is secured by the elastic retaining means, and wherein the elastic fingers engage in the fastening aperture of the object. In this arrangement, the fastening aperture of the object can have an edge of the aperture that widens toward the outside, upon which the elastic fingers of the clip are supported.

The invention is explained in detail below using an exemplary embodiment that is shown in the drawings, wherein:
- Figure 1: is a first perspective view of a clip according to the invention,
- Figure 2: is a second perspective view of the clip from Figure 1,
- Figure 3: is a cross-section through a fastening arrangement with a clip from Figure 1, and
- Figure 4: is an enlarged section A from Figure 3.

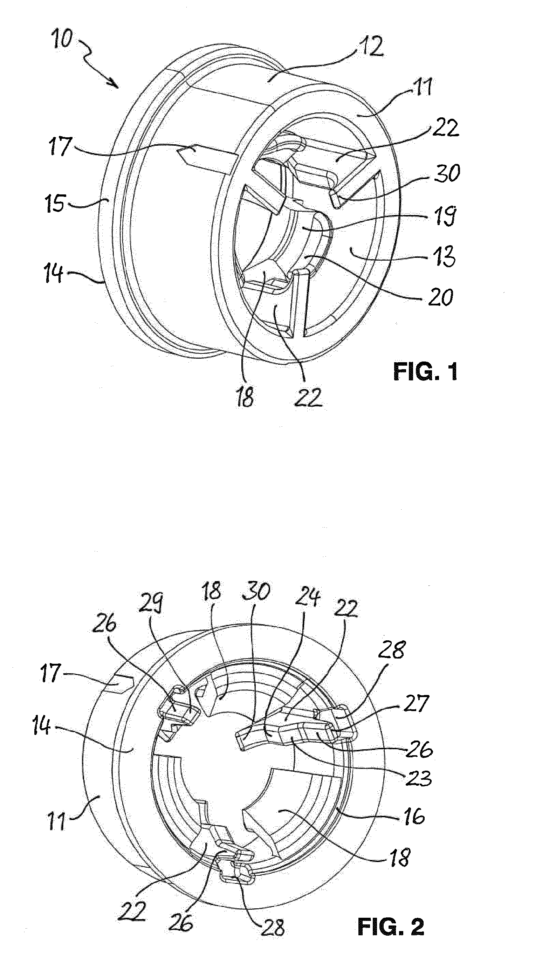

The clip 10 shown in Figures 1 and 2 has a tubular hollow body 11 with a cylindrical circumferential surface 12 and a cylindrical cavity 13. A first end 14 of the hollow body 11 is provided with a reinforced annular shoulder 15, which surrounds an opening 16 for the insertion of a stud. Visible in the circumferential surface 12 are arrows 17 composed of indentations, which point in the direction in which the clip 10 is installed.

Arranged at regular intervals in the cavity 13 are three elastic locking fingers 18, which are attached to the hollow body 11 in the vicinity of the opening 16, and extend into the cavity 13 at an angle to the central axis of the clip 10. At their free ends, the locking fingers 18 each have a first locking surface 19 extending in the radial direction, and a second axially extending locking surface 20 with a concave curvature. Both locking surfaces 19, 20 face the central axis.

In the gaps between the locking fingers 18, centering ribs 22 that extend axially and radially inward are attached to the hollow body 11. The centering ribs 22 have a centering section 23 that is inclined toward the central axis, and an adjoining support section 24 that is parallel to the central axis. Formed on the ends of the centering ribs 22 facing the opening 16 are elastic fingers 26, which extend in the direction of the opening 16, essentially parallel to the axis, and whose free ends 27 protrude out of the opening 16. The elastic fingers 26 are separated from the hollow body 11 by recesses 28 in the inside wall of the hollow body.

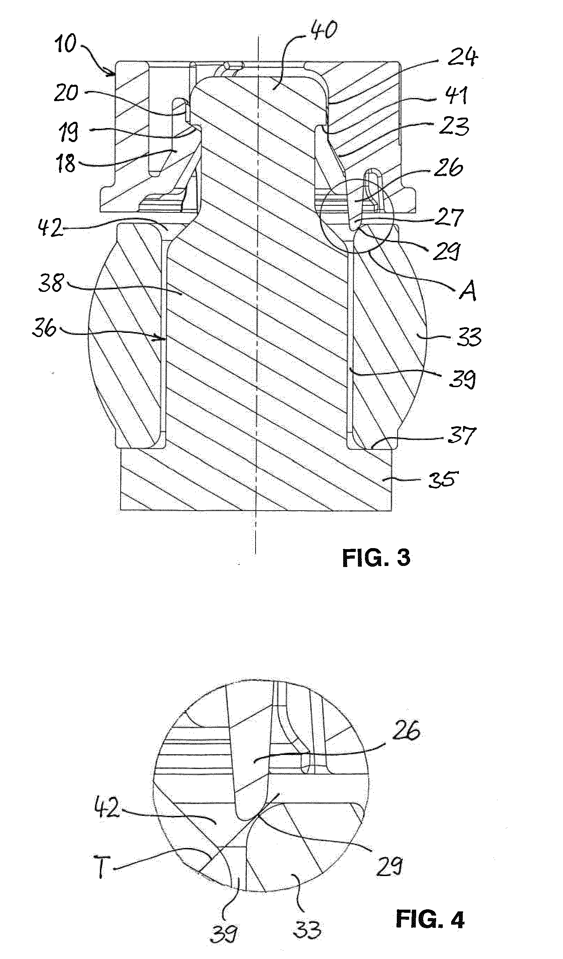

The ends 27 of the fingers 26 are provided, on the side facing away from the central axis, with support surfaces 29, which have a convex curvature and are oriented such that they approach the central axis with increasing distance from the hollow body 11. As a result of this orientation, a tangent T touching the support surface 29 approximately in the center intersects the central axis at an angle of 45°, as shown in Fig. 4. The ends of the centering ribs 22 opposite the fingers 26 are provided with radially inward directed extensions that form stops 30, which limit the penetration depth of a stud inserted in the clip 10.

Fig. 3 shows a fastening arrangement in which an object 33 is fastened to a support part 35 using a clip 10. The support part 35 has a stud 36 that is integral or attached by adhesive bonding or welding, that projects from a contact surface 37 and whose shank 38 extends through a fastening aperture 39 in the object 33. The free end of the stud is composed of a cylindrical head 40, which is offset from the shank 38 by an engagement step 41 facing the contact surface 37. The outside diameter of the head 40 essentially equals, which is to say except for a customary clearance of motion, twice the distance of the support sections 24 of the centering ribs 22 from the central axis of the clip 10.

In order to fasten the object 33 to the support part 35, the clip 10 is mounted on the end of the stud 36 protruding from the fastening aperture 39. During mounting, first the locking fingers 18 are spread apart by the head 40 of the stud 36 entering the cavity 13, and the head 40 is centered in the clip 10 by the centering ribs 22, initially with the aid of the centering sections 23 and then by the support sections 24. Once the engagement step 41 has passed the locking surfaces 19 of the locking fingers 18, the locking fingers 18 spring back to their starting position as illustrated, in which the locking surfaces 19 achieve an engagement position that can be supported on the engagement step 41 and the locking surfaces 20 contact the outside of the head 40. At approximately the same time, the ends 27 of the elastic fingers 26 enter the fastening aperture 39 of the object 33, and their support surfaces 29 make contact with a rounded edge 42 of the fastening aperture 39, in which process they are pressed radially inward by the edge 42. The axial components of the spring forces of the fingers 26 thus generated have the effect, upon termination of the assembly process by release of the clip 10, that the clip 10 is pressed against the engagement step 41 by the locking surfaces 19 of the locking fingers 18. The object 33 is pressed against the contact surface 37 of the support part 35 by the opposing force component acting on the object 33.

In this way, the connection composed of the support part 35, object 33, and clip 10 is held without play in the axial direction, and rattling noises caused by vibrations are avoided. In addition, the elastic fingers 26, in conjunction with the radial support of the centering ribs 22, are responsible for stabilization of the coaxial orientation of the clip 10 relative to the stud 36, thus ensuring that high resistance to the clip 10 being pulled off the stud 36 is maintained.

## Claims

1. Clip (10) for fastening an object (33) that is provided with a fastening aperture (39) to a stud (36) projecting from a support part (35), having a hollow body (11) that extends along an axis and that has a cavity (13) and has, at a first axial end (14), an opening (16) for insertion of the stud (36) and has, in the cavity (13), elastic retaining means by which the stud (36) can be secured in the cavity (13), wherein radially elastic fingers (26) are arranged on the hollow body (11), the fingers (26) project in the axial direction from the first end (14) of the hollow body (11) and are intended to support the clip (10) in the fastening aperture (39) of the object (33), **characterized in that** axially extending centering ribs (22) are arranged in the cavity (13) and attached to the hollow body (11) inside the cavity (13), and their ends facing the opening (16) each form one of the elastic fingers (26), the ends (27) of which protrude out of the opening (16),

2. Clip according to claim 1, **characterized in that** the elastic fingers (26) have, at their ends (27), outward-facing support surfaces (29) that are shaped or oriented such that they approach the axis more closely with increasing distance from the first end (14).

3. Clip according to one of the preceding claims, **characterized in that** the ends of the centering ribs (22) distant from the opening (16) have a stop on which the free end of the stud (36) can be supported.

4. Clip according to one of the preceding claims, **characterized in that** elastic locking fingers (18) are arranged in the cavity (13) between the centering ribs (22), which fingers extend outward in the insertion direction from an attachment point near the opening (16).

5. Clip according to the preceding claim, **characterized in that** each locking finger (18) is attached, at its end adjacent to the opening (16), to the hollow body (11) by an elastically flexible section.

6. Clip according to one of claims 4 or 5, **characterized in that** the locking fingers (18) have a first, radially extending locking surface (19) at their free ends, and have a second, axially extending locking surface (20) adjacent to the first locking surface (19).

7. Clip according to one of the preceding claims, **characterized in that** the hollow body (11) has a cylindrical annular wall that surrounds the cavity (13) and is provided at the first end with a reinforced annular shoulder (15) surrounding the opening (16).

8. Fastening arrangement having a support part (35) that has a stud (36) projecting therefrom with a shank (38) and with a head (40) that is offset from the shank (38) by an engagement step (41), having an object (33) with a fastening aperture (39) through which the shank (38) of the stud (36) extends far enough from one side of the object (33) that the head (40) of the stud (36) projects on the other side of the object (33), **characterized by** a clip (10) according to one of the preceding claims, wherein the head (40) of the stud (36) is located in the cavity (13) of the clip (10) and is secured by the elastic retaining means, and wherein the elastic fingers (26) engage in the fastening aperture (39) of the object (33).

9. Fastening arrangement according to claim 8, **characterized in that** the fastening aperture (39) of the object (33) has an edge (42) of the aperture that widens toward the outside, and the elastic fingers (26) are supported on the edge (42) of the aperture that widens toward the outside.

10. Fastening arrangement according to one of claim 8 and 9, **characterized in that** the head (40) of the stud (36) has a cylindrical section that is opposite the centering ribs (22) of the clip (10) and the diameter of which is essentially twice the distance that the centering ribs (22) are from the axis of the hollow body (11).

## Patentansprüche

1. Clip (10) zur Befestigung eines Gegenstands (33), welcher mit einer Befestigungsöffnung (39) versehen ist, an einem von einem Trägerteil (35) abstehenden Bolzen (36), mit einem sich längs einer Achse erstreckenden Hohlkörper (11), der einen Hohlraum (13), an einem ersten axialen Ende (14) eine Öffnung (16) zum Einstecken des Bolzens (36) und in dem Hohlraum (13) federnde Haltemittel aufweist, durch die der Bolzen (36) in dem Hohlraum (13) festhaltbar ist, wobei an dem Hohlkörper (11) radial federnde Finger (26) angeordnet sind, die in axialer Richtung von dem ersten Ende (14) des Hohlkörpers (11) abstehen und zum Abstützen des Clips (10) in der Befestigungsöffnung (39) des Gegenstands (33) bestimmt sind, **dadurch gekennzeichnet, dass** sich axial erstreckende Zentrierrippen (22) in dem Hohlraum (13) angeordnet und an dem Hohlkörper (11) dem Hohlraum (13) befestigt sind, und deren der Öffnung (16) zugekehrten Enden jeweils einen der federnden Finger (26) bilden, deren Enden (27) aus der Öffnung (16) herausragen

2. Clip nach Anspruch 1, **dadurch gekennzeichnet, dass** die federnden Finger (26) an ihren Enden (27) nach außen weisende Abstützfiächen (29) haben, die eine solche Form oder Ausrichtung haben, dass sie sich mit zunehmendem Abstand von dem ersten Ende (14) der Achse nähern.

3. Clip nach einem der vorhergehenden Ansprüche, **dadurch gekennzeichnet, dass** die von der Öffnung (16) entfernten Enden der Zentrierrippen (22) einen Anschlag aufweisen, an dem der Bolzen (36) mit seinem freien Ende abstützbar ist.

4. Clip nach einem der vorhergehenden Ansprüche, **dadurch gekennzeichnet, dass** in dem Hohlraum (13) zwischen den Zentrierrippen (22) federnde Sperrfinger (18) angeordnet sind, die sich von einer Befestigungsstelle nahe der Öffnung (16) aus in Einsteckrichtung erstrecken.

5. Clip nach dem vorhergehenden Anspruch, **dadurch gekennzeichnet, dass** jeder Sperrfinger (18) mit seinem der Öffnung (16) benachbarten Ende durch einen federnd biegbaren Abschnitt an dem Hohlkörper (11) befestigt ist.

6. Clip nach einem der Ansprüche 4 oder 5, **dadurch gekennzeichnet, dass** die Sperrfinger (18) an ihren freien Enden eine erste sich radial erstreckende Sperrfläche (19) und an diese angrenzend eine zweite sich axial erstreckende Sperrfläche (20) haben.

7. Clip nach einem der vorhergehenden Ansprüche, **dadurch gekennzeichnet, dass** der Hohlkörper (11) eine zylindrische Ringwand aufweist, die den Hohlraum (13) umgibt und an dem ersten Ende mit einem die Öffnung (16) umgebenden, verstärkten Ringbund (15) versehen ist.

8. Befestigungsanordnung mit einem Trägerteil (35), das einen von ihm abstehenden Bolzen (36) mit einem Schaft (38) und einem durch eine Eingriffsstufe (41) von dem Schaft (38) abgesetzten Kopf (40) aufweist, einem Gegenstand (33) mit einer Befestigungsöffnung (39), durch die sich der Bolzen (36) von einer Seite des Gegenstands (33) mit seinem Schaft (38) so weit erstreckt, dass der Kopf (40) des Bolzens (36) auf der anderen Seite des Gegenstand (33) heraussteht, **gekennzeichnet durch** einen Clip (10) nach einem der vorhergehenden Ansprüche, wobei der Kopf (40) des Bolzens (36) in dem Hohlraum (13) des Clips (10) angeordnet und von den federnden Haltemitteln festgehalten ist und wobei die federnden Finger (26) in die Befestigungsöffnung (39) des Gegenstands (33) eingreifen.

9. Befestigungsanordnung nach Anspruch 8, **dadurch gekennzeichnet, dass** Befestigungsöffnung (39) des Gegenstands (33) einen sich nach außen erweiternden Öffnungsrand (42) aufweist und die federnden Finger (26) sich an dem nach außen erweiternden Öffnungsrand (42) abstützen.

10. Befestigungsanordnung nach einem der Ansprüche 8 oder 9, **dadurch gekennzeichnet, dass** der Kopf (40) des Bolzens (36) einen zylindrischen Abschnitt aufweist, der den Zentrierrippen (22) des Clips (10) gegenüberliegt und dessen Durchmesser im Wesentlichen gleich dem Doppelten des Abstands ist, den die Zentrierrippen (22) von der Achse des Hohlkörpers (11) haben.

## Revendications

1. Agrafe (10) pour fixer un objet (33) qui est pourvu d'une ouverture de fixation (39) à une tige (36) faisant saillie d'une partie support (35), comportant un corps creux (11) qui s'étend le long d'un axe et qui comporte une cavité (13) et comporte, à une première extrémité axiale (14), une ouverture (16) pour l'insertion de la tige (36) et comporte, dans la cavité (13), des moyens de retenue élastiques par lesquels la tige (36) peut être fixée dans la cavité (13), dans laquelle des doigts radialement élastiques (26) sont agencés sur le corps creux (11), les doigts (26) font saillie dans la direction axiale de la première extrémité (14) du corps creux (11) et sont destinés à supporter l'agrafe (10) dans l'ouverture de fixation (39) de l'objet (33), **caractérisée en ce que** des nervures de centrage s'étendant axialement (22) sont agencées dans la cavité (13) et fixées au corps creux (11) à l'intérieur de la cavité (13), et leurs extrémités faisant face à l'ouverture (16) forment chacune un des doigts élastiques (26), dont les extrémités (27) font saillie hors de l'ouverture (16).

2. Agrafe selon la revendication 1, **caractérisée en ce que** les doigts élastiques (26) comportent, à leurs extrémités (27), des surfaces de support orientées vers l'extérieur (29) qui sont formées ou orientées de sorte qu'elles se rapprochent de l'axe plus étroitement alors que la distance par rapport à la première extrémité (14) augmente.

3. Agrafe selon l'une des revendications précédentes, **caractérisée en ce que** les extrémités des nervures de centrage (22) à distance de l'ouverture (16) comportent une butée sur laquelle l'extrémité libre de la tige (36) peut être supportée.

4. Agrafe selon l'une des revendications précédentes, **caractérisée en ce que** des doigts de verrouillage élastiques (18) sont agencés dans la cavité (13) entre les nervures de centrage (22), lesquels doigts s'étendent vers l'extérieur dans la direction d'insertion à partir d'un point de fixation à proximité de l'ouverture (16).

5. Agrafe selon la revendication précédente, **caractérisée en ce que** chaque doigt de verrouillage (18) est fixé, à son extrémité adjacente à l'ouverture (16), au corps creux (11) par une section flexible élastiquement.

6. Agrafe selon l'une des revendications 4 et 5, **caractérisée en ce que** les doigts de verrouillage (18) comportent une première surface de verrouillage (19) s'étendant radialement à leurs extrémités libres, et comportent une deuxième surface de verrouillage (20) s'étendant axialement, adjacente à la première surface de verrouillage (19).

7. Agrafe selon l'une des revendications précédentes, **caractérisée en ce que** le corps creux (11) comporte une paroi annulaire cylindrique qui entoure la cavité (13) et qui est prévue à la première extrémité, un épaulement annulaire renforcé (15) entourant l'ouverture (16).

8. Agencement de fixation comportant une partie support (35) qui comporte une tige (36) faisant saillie de celle-ci avec une queue (38) et avec une tête (40) qui est déportée de la queue (38) par un épaulement de mise en prise (41), comportant un objet (33) avec une ouverture de fixation (39) à travers laquelle la queue (38) de la tige (36) s'étend suffisamment loin d'un côté de l'objet (33) pour que la tête (40) de la tige (36) fasse saillie de l'autre côté de l'objet (33), **caractérisé par** une agrafe (10) selon l'une des revendications précédentes, dans lequel la tête (40) de la tige (36) est située dans la cavité (13) de l'agrafe (10) et est fixée par les moyens de retenue élastiques, et dans lequel les doigts élastiques (26) s'engagent dans l'ouverture de fixation (39) de l'objet (33).

9. Agencement de fixation selon la revendication 8, **caractérisé en ce que** l'ouverture de fixation (39) de l'objet (33) comporte un bord (42) de l'ouverture qui s'élargit vers l'extérieur, et les doigts élastiques (26) sont supportés sur le bord (42) de l'ouverture qui s'élargit vers l'extérieur.

10. Agencement de fixation selon l'une des revendications 8 et 9, **caractérisé en ce que** la tête (40) de la tige (36) a une section cylindrique qui est opposée aux nervures de centrage (22) de l'agrafe (10) et dont le diamètre est essentiellement égal à deux fois la distance à laquelle les nervures de centrage (22) se trouvent de l'axe du corps creux (11).
